# EUROPEAN PATENT APPLICATION

(11) **EP 4 572 345 A2**
(43) Date of publication of application: **18.06.2025**
(21) Application number: 24214609.0
(22) Date of filing: 21.11.2024
(51) Int. Cl.: H04W 4/021, B65G 43/00

(54) **METHOD AND SYSTEM FOR WIRELESS COMMUNICATION IN A CONVEYOR SYSTEM**

(30) Priority: 22.11.2023 US 202363601916 P
(71) Applicant: ATS Corporation, Cambridge, Ontario N3H 4R7 (CA)
(72) Inventor: KLEINIKKINK, Albert, Cambridge, Ontario, N3H 4R7 (CA)
(74) Representative: Ipey

(57) **Abstract**

A method and system for wireless communication with accessories on moving elements in a conveyor system, the conveyor system including a conveyor controller for independently controlling the moving elements. The method includes: configuring two or more track wireless hubs to cover respective wireless zones, each providing wireless coverage for a portion of the conveyor system; configuring two or more moving elements on the conveyor system with pallet wireless hubs configured to communicate with the track wireless hubs; communicating between the conveyor controller and at least one of the track wireless hubs when one of the moving elements having a predetermined identification is entering the respective wireless zone; performing a simplified connection between the track wireless hub and the respective pallet wireless hub based on the predetermined identification; and controlling an accessory on the entering moving element using communications via the track wireless hub and the pallet wireless hub.

## Description

### Field

This application generally relates to conveyor systems and methods, and more specifically to wireless communications in a conveyor system, including wireless communication with an accessory provided to a moving element in the conveyor system.

### Background

One developing area for conveyor systems, including belt or scroll driven conveyors as well as, more recently, linear motor driven conveyors, is to provide power for use on the moving element/pallet when the moving element/pallet is moving. For example, it can be useful to have power available on the moving element in order to power accessories on the moving element/pallet so that operations can be performed either while the moving element is moving, or operations can be performed on the pallet without connecting an outside power source.

While power sources can be provided to a moving element/pallet by using batteries, the batteries can be bulky and require regular recharging. Power can also be provided by cabling, but this generally requires guidance systems for the cabling during movement and can limit the range of motion.

More recently, it is possible to provide power on moving elements/pallets for transport systems using inductive power. This can be particularly effective in linear motor conveyor systems, which use a motor that already includes electromagnetic fields, providing a source for inductive power to be transferred.

Once power is available for accessories on the pallet/moving element, it can become important to be able to provide wireless communications with the accessories, particularly as the accessories become more complex. In this case, the reliability and speed of wireless communications and/or the bandwidth available become important considerations as the high speeds and accelerations of modern conveyor systems, and linear motor conveyor systems in particular, require very fast and precise control of both the moving elements and the accessories thereon.

Accordingly, there is a need for an improved system and method for providing wireless communications within a conveyor system, such as a linear motor conveyor system, to control accessories that receive power provided to the moving element.

### Summary

According to an aspect herein, there is provided a method for wireless communication with accessories on moving elements in a conveyor system, the conveyor system including a conveyor controller for independently controlling the moving elements, the method including: configuring two or more track wireless hubs to cover respective wireless zones, each providing wireless coverage for at least a portion of the conveyor system; configuring two or more moving elements on the conveyor system with pallet wireless hubs configured to communicate with the two or more track wireless hubs; communicating between the conveyor controller and at least one of the two or more track wireless hubs when one of the moving elements having a predetermined identification is entering the wireless zone for the at least one of the two or more track wireless hubs; performing a simplified connection between the track wireless hub and the pallet wireless hub of the entering moving element based on the predetermined identification; and controlling an accessory on the entering moving element using communications from the conveyor controller via the track wireless hub and the pallet wireless hub.

In some cases, the method may further include: communicating between the conveyor controller and the track wireless hub when one of the moving elements having a predetermined identification is leaving the wireless zone for the track wireless hub; and discontinuing communication of the track wireless hub with the pallet wireless hub for the leaving moving element. In this case, the method may include, prior to discontinuing communication, sending a communication locking the accessory prior to the moving element leaving the wireless zone. In this case, the locking the accessory may include causing the accessory to: stop; continue operating in the same way; perform one or more operations for a predetermined period of time; perform one or more operations for a predetermined number of operations, or the like.

In some cases, the performing a simplified connection may include a message from the track wireless hub to the pallet wireless hub containing the predetermined identification and a basic acknowledgement of communications from the pallet wireless hub to the track wireless hub. In this case, the basic acknowledgement of communications may include a single bit that is toggled on each message thereafter from the pallet wireless hub to indicate that the pallet wireless hub is operational.

In some cases, the communications between the track wireless hub and pallet wireless hub may be implemented using a simplified communications protocol. In particular, the simplified communications protocol may use messages of less than two bytes.

According to another aspect herein, there is provided a system for wireless communication with accessories on moving elements in a conveyor system, the conveyor system including a conveyor controller for independently controlling the moving elements, the system including: two or more track wireless hubs configured to cover respective wireless zones providing wireless coverage for at least a portion of the conveyor system; and at least two pallet wireless hubs provided to at least some moving elements on the conveyor system and configured to communicate with the two or more track wireless hubs, wherein: the conveyor controller is configured to communicate with at least one of the two or more track wireless hubs when one of the moving elements having a predetermined identification is entering a related wireless zone for the at least one of the two or more track wireless hubs; the track wireless hub and the pallet wireless hub of the entering moving element are configured to perform a simplified connection based on the predetermined identification; and the pallet wireless hub is configured to provide communications received from the track wireless hub to an accessory controller on the entering moving element for controlling an accessory on the entering moving element based on the communications.

In some cases, the conveyor controller may be configured to communicate with the track wireless hub when one of the moving elements is leaving the wireless zone for the track wireless hub and provide the predetermined identification for the leaving moving element; and cause the track wireless hub to discontinue communication with the pallet wireless hub based on the predetermined identification for the leaving moving element. In this case, the track wireless hub may, prior to discontinuing communication, send a communication locking the accessory prior to the moving element leaving the wireless zone. In this case, the locking the accessory may include causing the accessory to: stop; continue operating in the same way; perform one or more operations for a predetermined period of time; perform one or more operations for a predetermined number of operations, or the like.

In some cases, the performing a simplified connection may include a message from the track wireless hub to the pallet wireless hub containing the predetermined identification and a basic acknowledgement of communications from the pallet wireless hub to the track wireless hub. In this case, the basic acknowledgement of communications may include a single bit that is toggled on each message thereafter from the pallet wireless hub to indicate that the pallet wireless hub is operational.

In some cases, the communications between the track wireless hub and pallet wireless hub are implemented using a simplified communications protocol in which each message includes two bytes or less.

According to another aspect herein, there is provided a method for identifying moving elements in a conveyor system, the conveyor system including a conveyor controller for independently controlling the moving elements, the method including: configuring at least one track wireless hub to provide wireless coverage for at least a portion of the conveyor system; configuring each of a plurality of moving elements on the conveyor system with a pallet wireless hub configured to communicate with the at least one track wireless hub; establishing wireless communications between the at least one track wireless hub and the pallet wireless hubs; independently vibrating each of the plurality of moving elements via the conveyor controller; identifying the vibration via an accelerometer provided to the moving element and communicating the accelerometer data to the conveyor controller via the pallet wireless hub and the track wireless hub; and identifying the plurality of moving elements based on the accelerometer data.

Generally speaking, the embodiments described herein are intended to overcome at least some of the issues with conventional systems and methods.

### Brief Description of the Drawings

The drawings included herewith are for illustrating various examples of systems and methods for providing power to moving elements in a transport system and are not intended to limit the scope of what is taught in any way. In the drawings:
FIG. 1 is a schematic diagram of a conveyor system, in particular a modular conveyor system;
FIG. 2 is a perspective view of a track section of the modular conveyor system of FIG. 1 with a moving element;
FIG. 3 is an expanded view of the track section of FIG. 2 with a moving element having an accessory thereon;
FIG. 4 is a front view of of the track section of FIG. 3;
FIG. 5 is a sectional view of the track sectionof FIG. 3;
FIG. 6 is a top view of of the track section of FIG. 3;
FIG. 7 is a front perspective view of an embodiment of a moving element;
FIG. 8 is a rear perspective view of the moving element of Fig. 7;
Fig. 9 is a perspective view of a vacuum system 1200 provided as an accessory to a moving element;
Fig. 10 is a perspective view of a gripper system 1300 provided as an accessory to a moving element;
Fig. 11 is a perspective view of a resistance heating system 1400 provided as an accessory to a moving element;
FIG. 12 is a block diagram of an embodiment of a control system/architecture for controlling embodiments of a conveyor system as described herein, including moving elements and one or more accessories on the moving elements;
FIG. 13 is a block diagram of an embodiment of a wireless communication system that can be used with embodiments of a conveyor system as described herein;
FIG. 14A is an example of a downlink message from a master controller to an accessory controller;
FIG. 14B is an example of an uplink message from an accessory controller to a master controller;
FIG. 15 illustrates an embodiment of a conveyor system including a wireless communication system having zones;
FIG. 16 illustrates an embodiment of a method for wireless communication in a conveyor system; and
FIG. 17 illustrates an embodiment of a timeline for wireless communication in a conveyor system.

### Detailed Description

Numerous specific details are set forth in order to provide a thorough understanding of the example embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description is not to be considered as limiting the scope of the embodiments described herein in any way, but rather as merely describing the implementation of the various embodiments described herein. The embodiments described herein are not intended to be limited to the specific details of any one example embodiment or to specific details that may be common to multiple, or all, example embodiments. The applicants, inventors or owners reserve all rights that they may have in any embodiments disclosed herein, for example the right to embodiments claimed in a continuing application, and do not intend to abandon, disclaim or dedicate to the public any such embodiments by disclosure of this document.

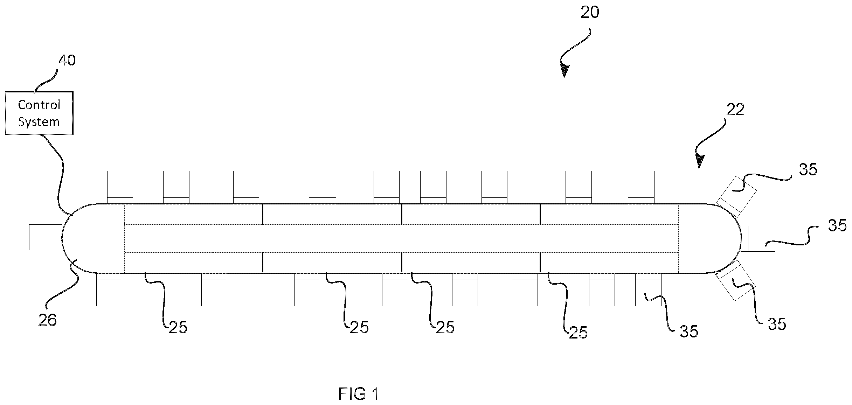

Figure 1 shows a schematic diagram of an example conveyor system 20. The conveyor system 20 includes a track 22 made up of one or more track sections 25, 26 defining a track. In Fig. 1, a plurality of straight track sections 25 are provided with two curved sections 26. A plurality of moving elements 35 are provided to the track and move around on the conveyor system 20. In a manufacturing environment, the moving elements 35 are intended to travel between workstations (not shown) and may support a pallet or product (not shown) that is to be operated on automatically by, for example, a robot, while moving or at a workstation or may travel to a workstation or other work area intended for manual operations. Through the operation of the conveyor system 20, various operations are performed to provide for the fabrication or assembly of the product. In this disclosure, the terms "moving element" and "pallet" may sometimes be used interchangeably, depending on the context.

It will be understood that the modular nature of the track sections allow for various sizes and shapes of conveyors and any appropriate number of moving elements. In Fig. 1, the corner (or curved) track sections 26 are 180 degree turns but, in some configurations, the curved track sections 26 may have different angles such as 45, 90, 135 degree angles or the like. Some of the principles of operation of a particular type of linear motor conveyor system are described in more detail in, for example, U.S. Patent No. 8,397,896 to Kleinikkink et al., which is hereby incorporated herein by reference.

As noted, the conveyor system 20 may include a plurality of track sections 25, 26, which are mechanically self-contained and separable from one another so as to be modular in nature. In order to be modular, each track section 25, 26 may house electronic circuitry and/or mechanical parts for powering and controlling the related track section 25, 26 and/or there may be a controller/control system 40 that controls the related track section or the track 22 overall (only one controller is shown but other controllers for track sections may be included as well, either together with a main/master controller or individually). In some cases, a track controller may communicate or interface with track section controllers provided for each of the track sections 25, 26. The controller(s) may include a processor that executes a program stored on a machine readable medium. The machine-readable medium may be stored on memory that is a part of the controller or at a remote location or the like.

In some types of conveyor systems, such as the linear motor conveyor system 20 shown in Fig. 1, the track 22 may produce a magnetic force for moving the moving element 35 along the track 22. The magnetic force can also capture, support or hold the moving element 35 on the track 22. The magnetic force is at least partly generated by the interaction of the magnetic flux created by magnetic elements (for example, embedded coils) of the track 22 and magnetic elements (for example, magnets) of the moving element 35. It will be understood the magnetic elements may have various arrangements on both the track 22 and the moving element 35. It will be understood that conveyor systems with different motor drives may be driven in other manners.

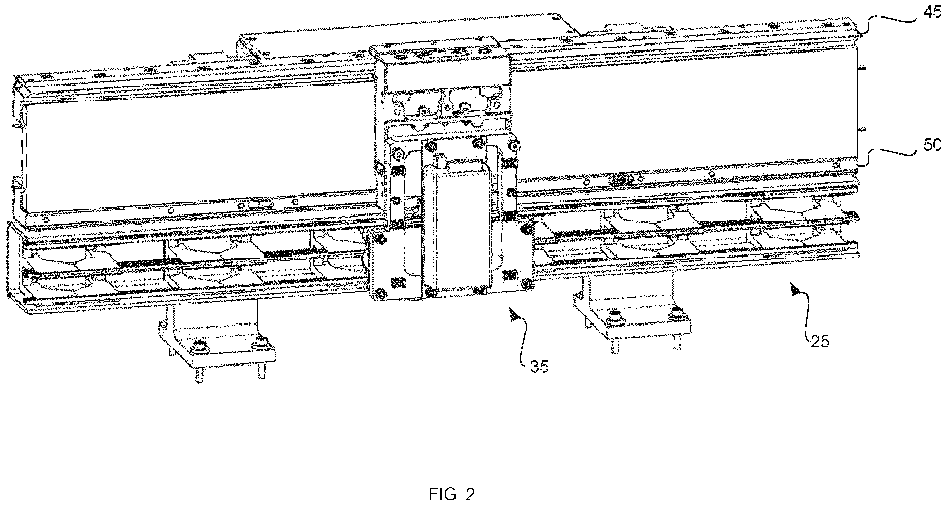

Figure 2 illustrates a perspective view of an embodiment of a straight track section 25 and a moving element 35. The track section 25 includes a guide rail 45 located in an upper portion of track section 25 and a lower guide rail 50. The moving elements 35 include bearings (not visible in Fig. 2) that run along a corresponding guide rail 45, 50.

In some embodiments, the track section 25 may produce a magnetic force for moving the moving element 35 along the track 22. The magnetic force can also capture/hold the moving element 35 on the track 22. In some cases, the magnetic force is created by the interaction of the magnetic flux created by coils (not shown) embedded in/under the track section 25 and magnetic elements (not shown) of the moving element 35. The magnetic force can be thought of as having a motive force component for directing movement of the moving element 35 along a direction of travel on the track 22, and a capturing force component to laterally hold the moving element 35 on the track 22 and in spaced relation to the track surface. In at least some conveyor systems, the motive force and the capturing force can be provided by the same magnetic flux.

Generally speaking, the track sections 25, 26 will be mounted on a support structure (not shown) so as to align and abut one another in order to form the track 22. As noted above, each track section may be controlled by a control system or by a track control system 40 that controls a plurality of or all of the track sections 25. The control system 40 controls each track section (and thus the track) to drive the moving elements and also receives data related to a position of the moving elements on the track such that the controller effectively controls the moving elements. In some embodiments, where the track uses a servo motor or the like rather than a linear motor to drive the moving elements, the control system 40 can control the servo motor and thus control the moving elements.

In embodiments herein, it will be understood that elements of each embodiment may be used with other embodiments as would be appropriate for the application desired.

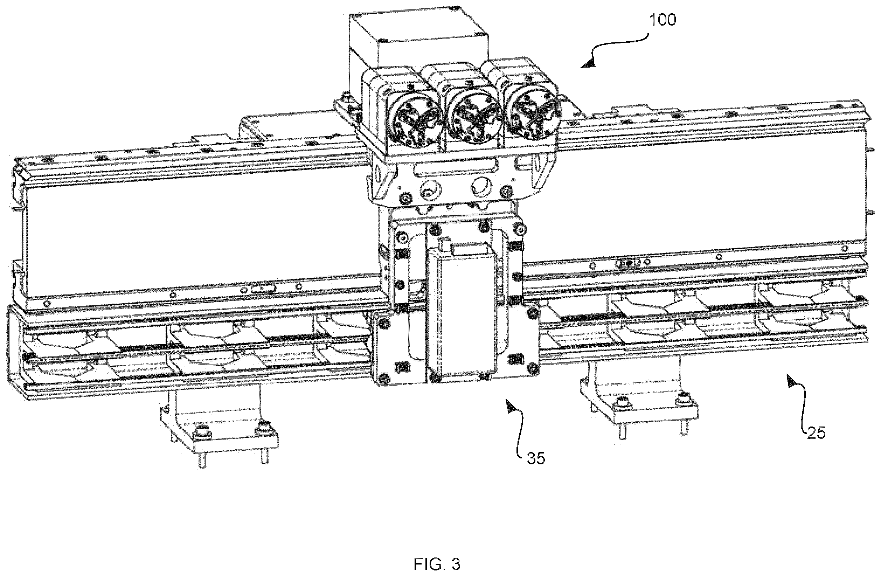

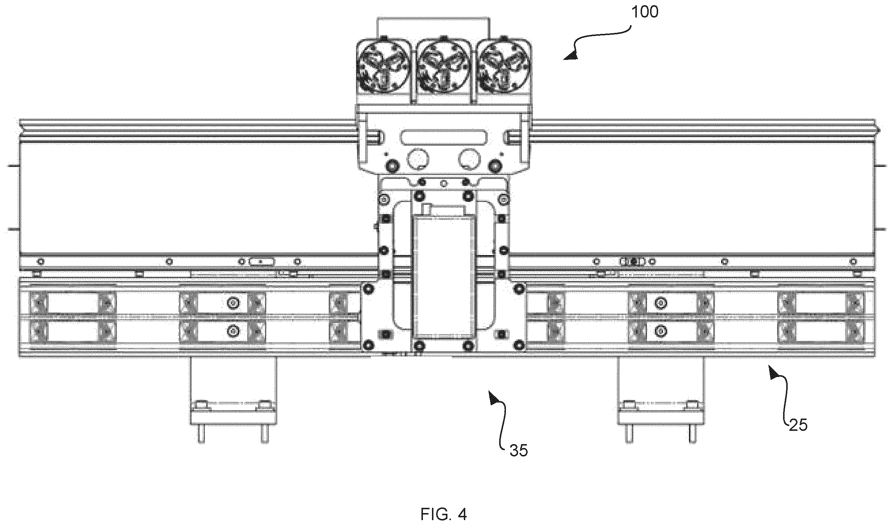

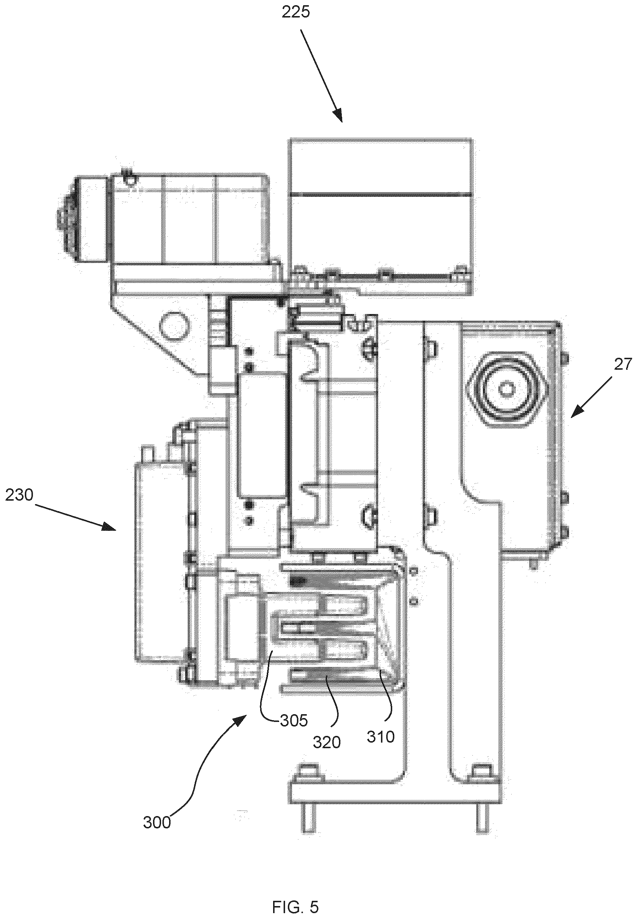

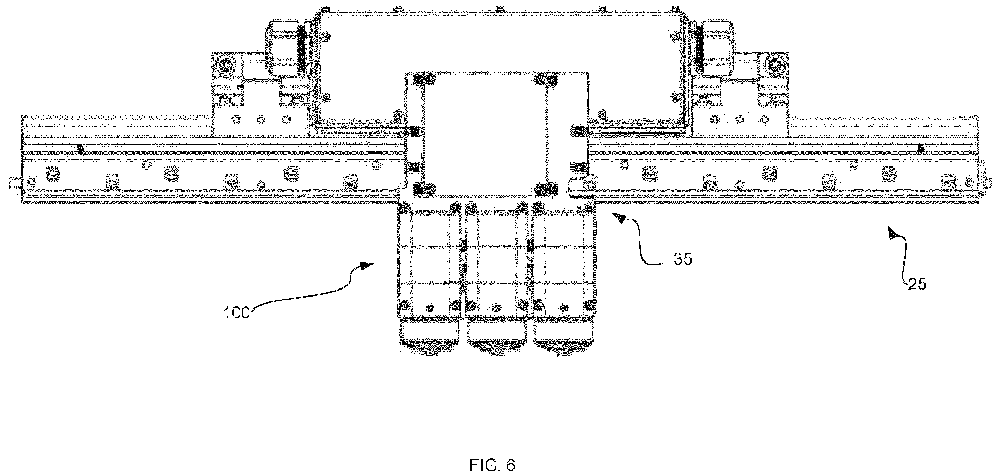

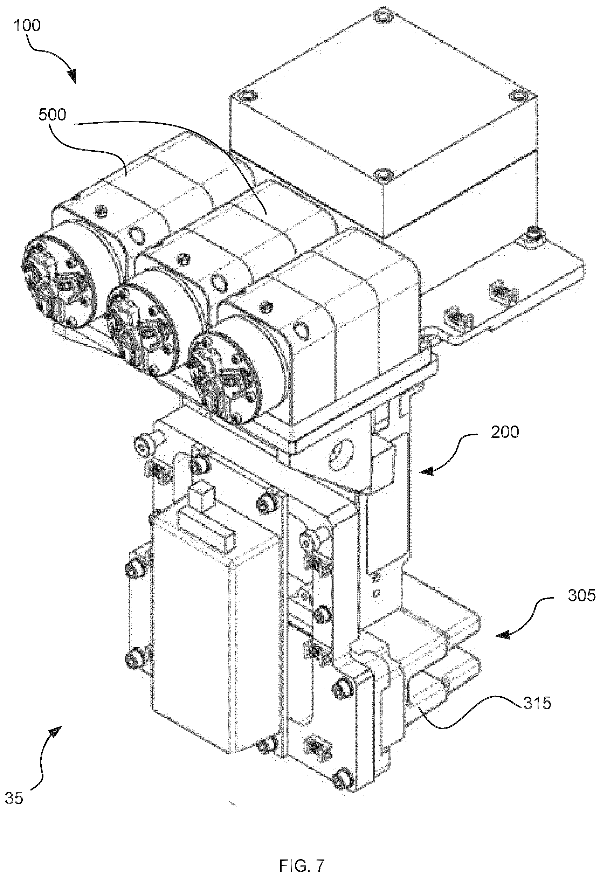

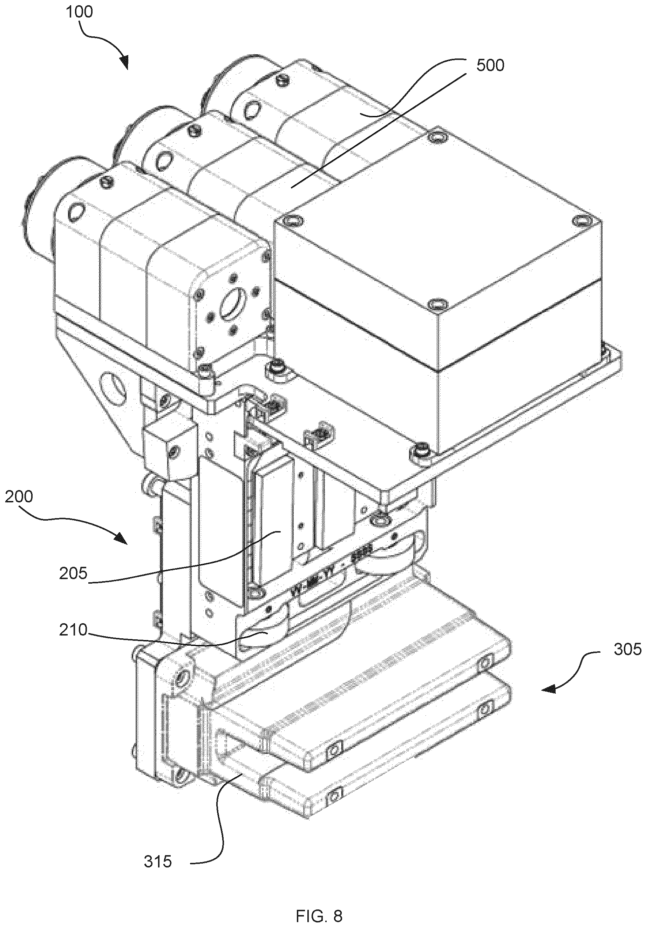

Fig. 3 is a perspective view illustrating the track section 25 and moving element 35 of Fig. 2 as well as an accessory 100 mounted on the moving element 35. In some cases, the accessory may be mounted on a pallet, tooling plate or the like carried by the moving element 35. Fig. 4 is a front view of the track section of Fig. 3. Fig. 5 is a side cross-sectional view of Fig. 4. Fig. 6 is a top view of Fig. 4. Fig. 7 is a front perspective view of the moving element and the accessory. Fig. 8 is a back perspective view of the moving element and the accessory.

As shown, each moving element 35 includes a body 200 which supports one or more permanent magnets 205 disposed to provide a magnetic flux orientated normal to the track section 25. Each moving element 35 includes upper bearings (not shown) and lower bearings 210 which ride along upper 45 and lower 50 guide rails of the track section 25.

The track section 25 and the moving element 35 include a system 300 for transferring power wirelessly between the track section 25 and the moving element 35. Each moving element 35 includes a moving element power transfer unit 305 that is configured to interact with a track power transfer unit 310 provided on the track section 25. In this particular embodiment, the moving element power transfer unit 305 includes one or more extensions 315 protruding toward the track section 25 and the track power transfer unit includes corresponding track extensions 320 on the track section 25 configured such that the moving element extensions 315 and corresponding track extensions 320 interlace. The moving element power transfer unit and the track power transfer unit are configured to inductively transfer power to the moving element, particularly while the moving element is moving. In this embodiment, the provision of a plurality of track power transfer units along the track at regular intervals or potentially continuous and the inter-engaging structure of the extensions is intended to provide for a greater and more consistent transfer of power since there can be a smooth transfer of power with multiple induction elements.

The extensions are sometimes referred to as power pick-up panels, energy pick-up elements, inductive pick-up elements or inductive panels. In the current embodiment, inductive transfer of power is used, and it will be understood that a single or larger number of induction panels may also be used. Generally speaking, the induction panels include at least one induction pick-up coil (not shown) and one or more ferrite cores (not shown). The field of induction coils is well known and an appropriate coil and/or ferrite core arrangement can be chosen depending on the required power transfer.

As shown in Fig. 5, in various embodiments, the moving element may also include an enclosure 225 for power management, accessory controller, battery or the like. The moving element may also include an enclosure 230 for a DC/DC converter where needed. The track section may also include an enclosure 27 for electronics, central or track section controller, or the like.

It will be understood that, for some embodiments, the system for transferring power wirelessly may be configured in other ways as long as power is made available to the moving element (for purposes other than driving the moving element) while it is moving. One other example of providing power to a moving element is provided in US Pat. No. US10300793, granted May 28, 2019. In some embodiments, the track may include an inductive cable and the moving elements may include inductive pick-up elements that interact with the inductive cable. In some cases, the inductive power transfer may use high frequency power transfer techniques.

It will be understood that various accessories may be provided depending on the part being handled, the needs of the manufacturing or conveyor system or the like. The ability to have power available on the moving element while the moving element is moving, and, in particular, consistent, reliable power, allows for a variety of different accessories to be provided.

As shown in Figs. 3-8, an accessory 100 that can be provided to or supported by the moving element 35 may be a rotary gripper 500 (sometimes called a spindle) or a plurality of rotatory grippers 500. In some embodiments, the rotary gripper 500 is configured to grip a part and rotate the part about an axis while the part is moved through one or more processes. Since the accessory 100, i.e. the rotary gripper(s) 500, can be powered by power available on the moving element 35, the part can be kept rotating while the moving element is moving. It can be useful to keep a part rotating in order to, for example, keep the product more consistent or the like. For example, some parts may be heated for malleability and need to be rotated so that one side does not deform differently from another. As another example, the part may undergo laser welding, laser marking or some kind of treatment while moving and require rotation to evenly treat different portions of the part. Still further, it can save time to rotate part(s) during transport so the parts are in the correct position or at the required speed as the moving element arrives at a station to allow for higher throughput.

It will be understood that, depending on the size of the moving element, the accessory can include a plurality of items such as the rotary grippers discussed herein. In particular, the accessory may be one rotary gripper or more up to the number that can be accommodated on the moving element. Still further, due to the availability of power on the moving element, the accessory can be any of various types including grippers, part/component adjustment mechanisms, motors of various kinds, robots, or the like.

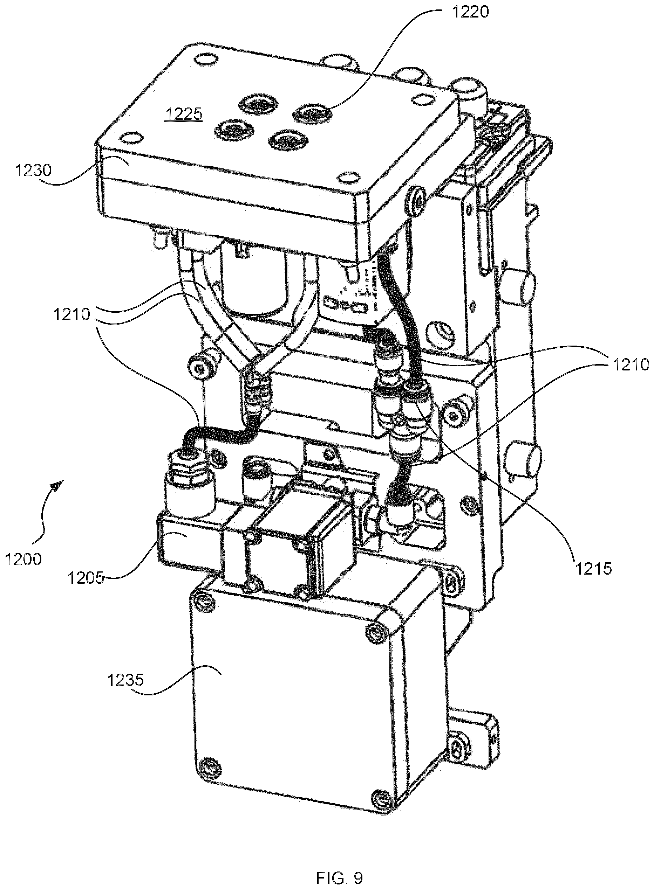

Figure 9 illustrates another accessory 1200 that can be provided on a moving element and powered by inductive power provided to the moving element. Fig. 9 is a perspective view of a vacuum system 1200 provided to a moving element. The vacuum system 1200 includes a vacuum pump 1205 and hoses 1210 to allow for the creation of a vacuum at an opening 1220 on a surface 1225 of a pallet 1230 carried by the moving element. There may also be one or more valves 1215 to, for example, allow for retention of vacuum even if the power isn't in use or available. In this way, the use of a valve may also allow for power savings but may also require an additional control signal. The vacuum pump 1205 can be controlled by an accessory controller in, for example, an enclosure 1235 on the moving element. Having a vacuum source available at the moving element can allow for easier handling of delicate/fragile parts such as glass, solar panels or the like that might be harmed by more direct contact. Vacuum can also be useful in handling parts that may lack available or useful mechanical gripping surfaces, have unusual shapes or the like. For example, parts that have an irregular shape or where there are parts with different sizes/formats that need to be gripped on the same moving element.

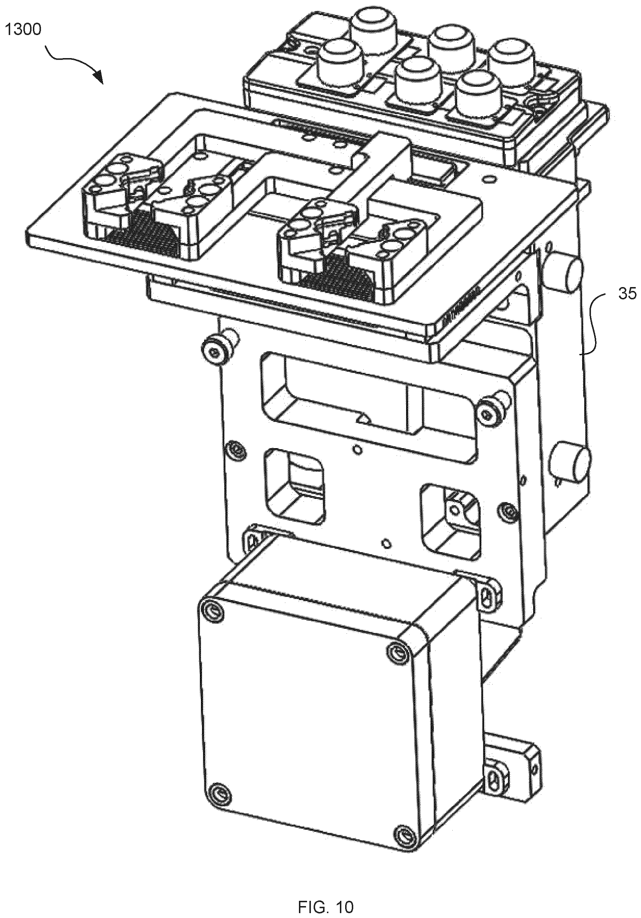

Figure 10 illustrates another accessory 1300 that can be provided on a moving element and powered by inductive power provided to the moving element. Fig. 10 is a perspective view of a gripper system 1300 provided to a moving element. The gripper system 1300 includes a drive mechanism and gripper arms that can be moved by the drive mechanism to allow for gripping items on a surface of a pallet carried by the moving element. The gripper system may also include a feedback mechanism (not shown). The gripper system 1300 can be controlled by an accessory controller in, for example, the enclosure on the moving element. The gripper system 1300 can be used for applications that require some form of adjustable containment (perhaps with a clearance) for a range of part sizes or the like. In some cases, the gripper system 1300 can be used to check part weight without having to transfer the part to a separate weigh station. Further, some gripper arms may have force control to allow for gripping delicate parts at a controlled force. In some other cases, the use of a gripper system 1300 on the moving element may allow for easier handling of rejected parts or the like.

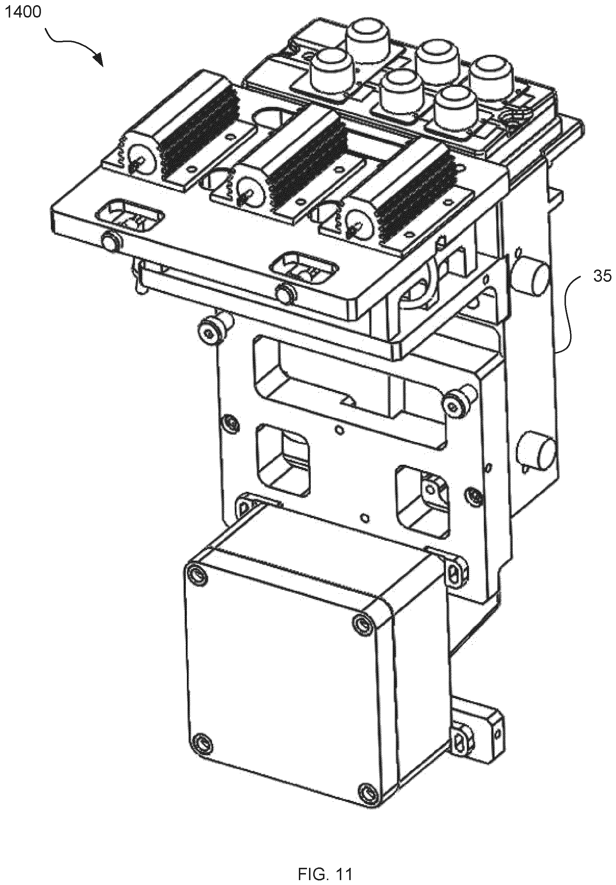

Figure 11 illustrates another accessory 1400 that can be provided on a moving element and powered by inductive power provided to the moving element. Fig. 11 is a perspective view of a heating/cooling system 1400 provided to a moving element. The heating/cooling system 1400 includes one or more heating/cooling elements (in this example, there are three heating elements) that can be provided with power to heat or cool a part or the environment of the moving element. In some cases, there may be a cover over the moving element or the part/heating cooling element. In some cases, there may also be one or more feedback sensors or the like to provide a controller with data on the temperature of the heating/cooling system, of the environment, of the part, or the like. The resistance heating system 1400 can be controlled by an accessory controller in, for example, the enclosure on the moving element. A heating/cooling system can be useful on a moving element when handling sensitive chemical processes/dispensing or the like. Further, a heating/cooling system can be useful for curing adhesives or the like during transit, holding temperatures following sealing or heat staking to reduce the time a part is held at a station. In embodiments providing heating, the heating can be provided by a resistance heating element. In embodiments providing cooling, the cooling can be provided by a Peltier device/TEC and applying a current.

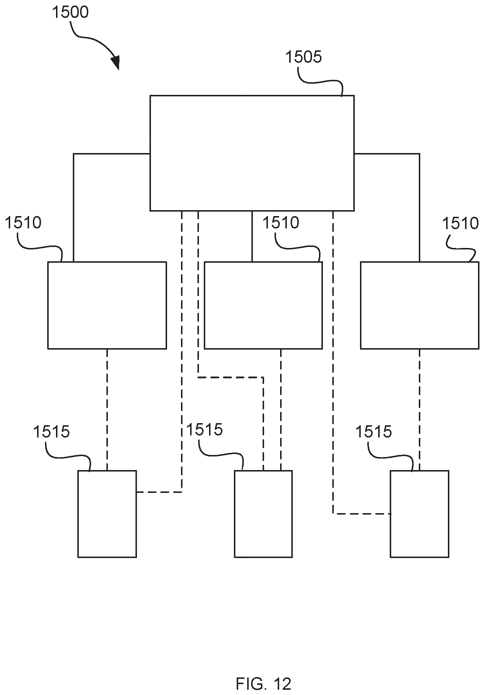

FIG. 12 is a block diagram of an example embodiment of a control system 1500 for the conveyor system 20. As shown in FIG. 12, the conveyor system 20 can include a central controller 1505 that controls the overall conveyor system 20. The conveyor system may also include a plurality of track section controllers 1510, for example, one for each of the track sections 35. Either the central controller 1505 or the track section controller 1510 may also control the accessory 100 on the moving element or an accessory controller 1515 may be provided (either on the track or on the moving element) to control the operation of the accessory. If needed, there may be control signals in both directions between the various controllers. It will be understood that, in some cases, the movement of the moving element may be controlled to work in relation to or in synchronization with the control of the accessory for co-ordinated operations or the like.

In some embodiments, the track section controllers 1510 may be connected to one another in a peer-to-peer communications network such that, for example, each section controller 1510 may be connected to preceding and following section controllers 1510 through a communications link or the like, rather than each section controller being connected to the central controller. Some alternative embodiments may include use of the central controller 1505 to convey information/data between/among section controllers 1510 and/or accessory controllers 1515 or the like.

The various controllers may be connected via, for example, input/output (I/O) modules or network modules or the like. The controllers may provide instructions to both the accessory(ies) and the track section 25/moving element 35, such as directing the next destination for a moving element 35 along the track, providing instructions to operate in a specific way depending on the location of the moving element on the track section, or the like. For example, the rotary gripper may be controlled to rotate a part/component as the moving element moves past a flame station adjacent to the track section such that the part/component is uniformly heated around a circumference or the like.

When inductive power is available on the moving element/pallet, it is useful to also be able to communicate with the accessory(ies) provided on the moving element in a wireless manner. In some cases, it may also be useful to communicate with or among track section controllers in a wireless manner. However, the provision of wireless instructions to accessory(ies) in a manufacturing environment can be difficult due to the need for high levels of reliability and the fast communications that are needed due to the fast speeds and accelerations of the conveyor and automation stations. The fast communications typically require smaller/faster communication lengths, but reliability typically requires more data. The difficulty of communications can be increased when the accessory is more complex and may have more commands that can be performed, such as where servo motors and sensors are used.

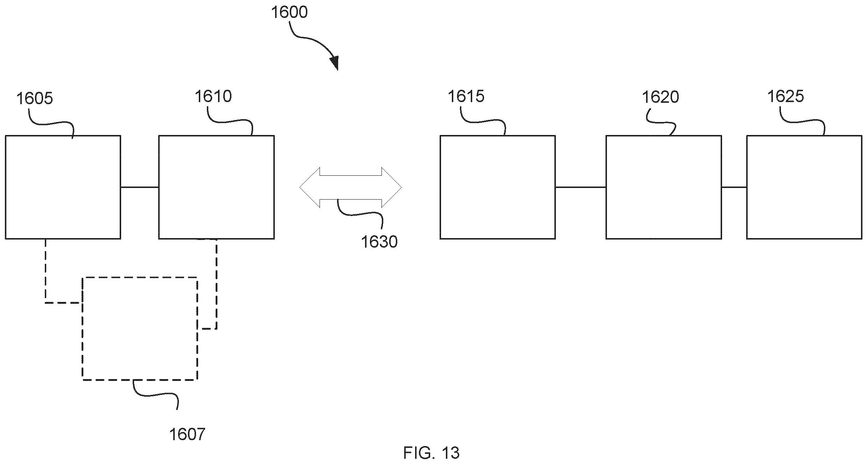

Figure 13 is a block diagram of an embodiment of a wireless communication system 1600 that can be used with embodiments of the conveyor system herein. Although the illustrated wireless communication system 1600 is directed at communication to an accessory (from either a central controller or a track section controller), a similar approach may be available for communications from a central controller to a track section controller or the like.

As noted, in Fig. 13, the wireless communication system 1600 is configured to allow communication between a conveyor or track controller and an accessory controller. The wireless communication system can include a master controller 1605 (for example, a programmable logic controller (PLC) or the like), a downlink converter/transmitter 1610, an accessory receiver/transmitter 1615, an accessory interface 1620, and an accessory 1625. The master controller 1605 may be the central controller for the conveyor system and communicate with the downlink converter/transmitter directly or, in some cases, the communication may be from a master controller via a track section controller 1607, depending on the overall communications approach determined in relation to Fig. 12.

In this arrangement, without the track section controller 1607, the master controller 1605 can issue instructions to the accessory and the instructions will be converted/translated by the downlink converter 1610 (which may sometimes be referred to as a track wireless hub) to a more concise communication format/protocol for transmission over the wireless link (illustrated by arrow 1630). The concise format instructions are received by the accessory receiver/transmitter 1615 (which may sometimes be referred to as a pallet wireless hub) and passed to the accessory interface 1620, which provides instructions to the accessory 1625. In some cases, the accessory interface 1620 may convert the instructions for the accessory 1625, if needed. The concise communication format/protocol can use multiple repeat messages with error checking and can generally limit each message to as small a size as possible by using, for example, default states, default conditions, and the like.

In some embodiments, the concise communication format may be adapted depending on the accessory involved. For example, servo motors or accessories with multiple motors, multiple controls, feedback loops, or the like, may involve more complex commands and may require a more detailed the communication format/protocol. Further, in some cases, there may be some commands that overlap among accessories and can be standardized. Still further, the amount of bandwidth and speed of communication required may also determine the level of translation/conversion required and whether or not additional conversion may be needed at the accessory interface.

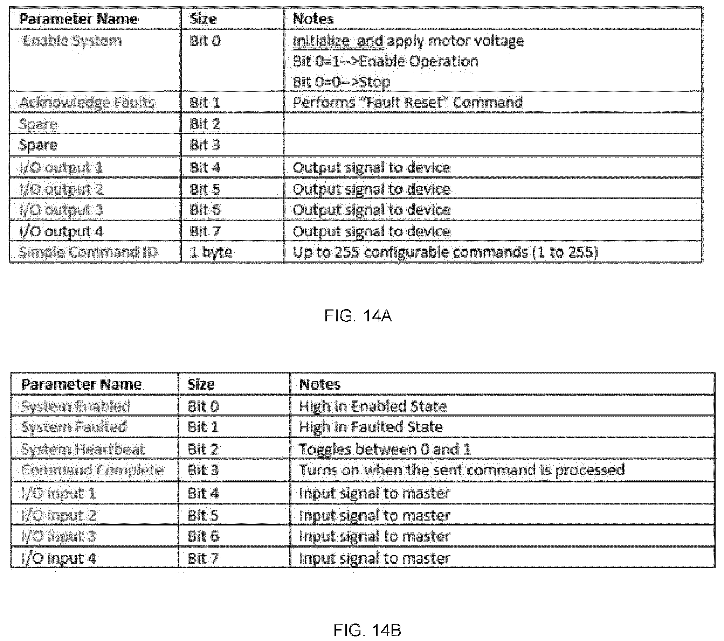

Figure 14A and 14B are basic examples of a downlink (master to accessory) message and an uplink (accessory to master) message illustrating the message size and examples of potential content. As illustrated, each message is generally limited to 2 or fewer bytes for faster communications. As shown in Fig. 14B, the accessory may include a signal of 1 bit that toggles at a predetermined period/frequency to indicate that communications are active and the accessory is available (referred to as a "heartbeat signal"). This type of heartbeat signal provides redundancy so that the communication channel can be regularly checked for errors. Further, because each message is so short, the time between exchanges of messages is very short and multiple messages can flow during commands being executed so that, even if one message is missed, the next message can be set to convey the same information for redundancy of communication. Further, as noted in Fig. 14A, the downlink message may include a simplified command, such as a coded command ID, that indicates a command that can be translated/converted at or enroute to the accessory to allow completion of a pre-configured command or command sequence. In cases where there is feedback from the accessory, the uplink communication may include a further byte with the feedback data if it cannot fit within the single byte shown in Fig. 14B.

In some manufacturing environments or conveyor systems, it may be beneficial to structure the wireless communications in zones. This may be the case where the manufacturing environment is too large, where only certain areas require communications with the accessory(ies), where there are obstructions that can impact (i.e. obstruct or otherwise cause issues) wireless signals, or the like. It will be understood that the wireless communications need to be as fast as possible and as error-free as possible in order to have the assembly lines and conveyor systems moving at the fastest speeds possible.

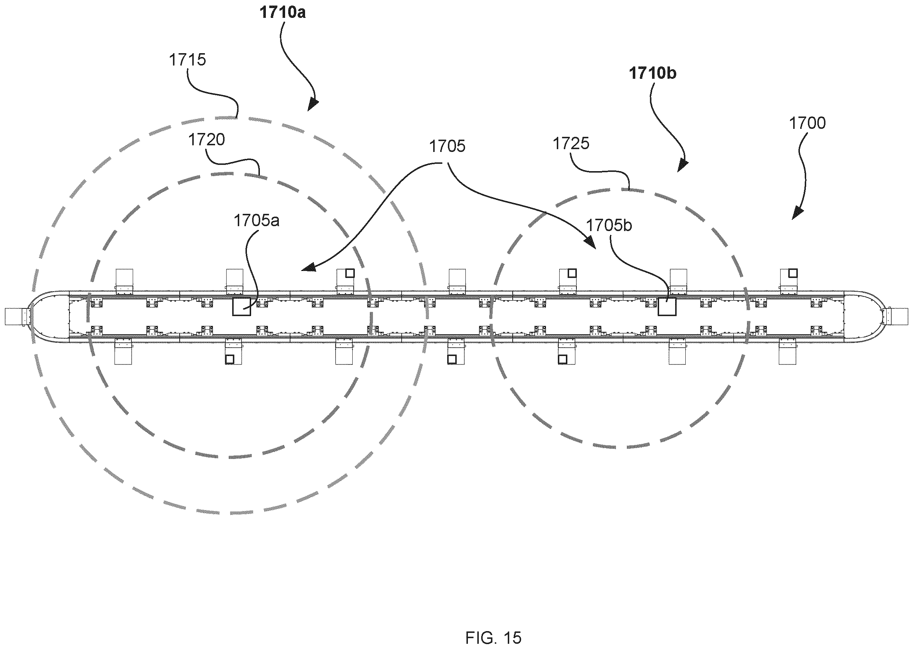

FIG. 15 illustrates a system 1700 for wireless communications in a conveyor system according to an embodiment herein. The system 1700 is configured to allow the connection of a track wireless hub 1705 at various locations on the conveyor system and connect or integrate the track wireless hub 1705 (including, for example, a downlink converter) with the conveyor system controller 1605 (as described with regard to Fig. 13). In some cases, the track wireless hub 1705 may be built into the conveyor system rather than connected thereto. FIG. 15 illustrates two track wireless hubs 1705a and 1705b providing two wireless zones 1710a and 171 0b, the first wireless zone 1710a having a secondary range 1715 and a primary range 1720 and the second wireless zone 1710b having just a primary range 1725. Generally speaking, a track wireless hub 1705 can be connected to/integrated with any one of the plurality of track sections. The track wireless hub will typically receive power via the track section and have a high-speed communication connection to the track section controller (via, for example, wired or wireless communication). Each moving element requiring wireless communication, for example, having an accessory configured to operate while in motion or the like, can include a pallet wireless hub 1730. In some cases, all moving elements may include a pallet wireless hub 1730 but connection of the track wireless hub 1705 to the pallet wireless hub 1730 can be controlled based on whether or not there are commands to be sent to the pallet wireless hub 1730. In general, the pallet wireless hub 1730 will be smaller than the track wireless hub 1705. Further, the pallet wireless hub 1730 could be integrated with the moving element, the accessory, or a pallet carrying the accessory. In some cases, the pallet wireless hub may be provided with more than one input/output (I/O) port in order to provide higher speeds/bandwidth. The pallet wireless hubs may also include an option to expand to more I/O, memory, or the like, as needed.

It will be understood that in a conventional wireless environment, a mobile device or the like will enter a wireless zone and will connect with a wireless base station via a handshaking process that includes an exchange of information about the mobile device, including a predetermined identification (ID) for the mobile device. In general, the handshaking process within typical Wi-Fi networks can be fast enough for the purposes of the typical Wi-Fi networks. However, in a high-speed conveyor system, the speeds involved can be so high that, there is not enough time to complete a typical Wi-Fi handshaking process before an action needs to occur. As an example, in modern conveyor systems, a moving element can move at 4m/sec or more. In this environment, the handshaking between a track wireless hub and a pallet wireless hub must be completed very quickly as a moving element enters a wireless zone so that commands can be sent as soon as possible in order to keep the system as a whole moving as fast as possible. In conventional conveyor systems, the approach is generally to extend the wireless zones so that the wireless zone covers the entire conveyor and handshaking between a master wireless hub and each of the pallet wireless hubs is completed at startup, when additional time is available, or movement is slowed to provide time for conventional connection/handshaking. However, there can be drawbacks to such a system such as latency, error rates, screening/blocking/deterioration of signals by metal elements of the conveyor system, and the like. The system and method herein make use of smaller wireless zones, each serviced by a track wireless hub and a sharing of information between the conveyor controller and the track wireless hub in order to provide for faster, more accurate and efficient wireless communications at the zones needed on the conveyor system.

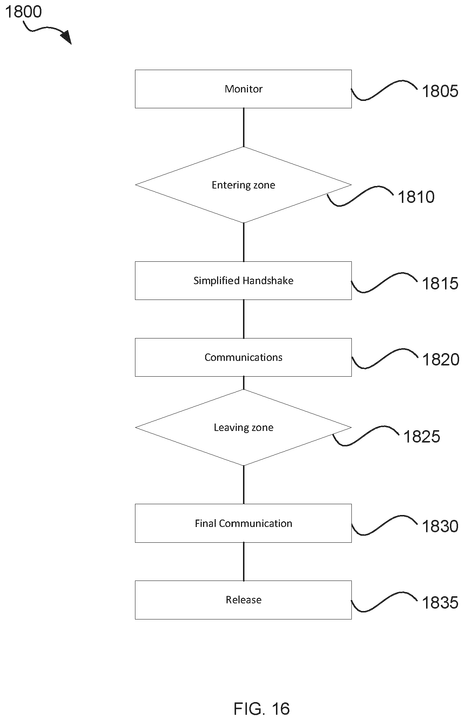

FIG. 16 is an embodiment of a method 1800 for wireless communications in a conveyor system. In this embodiment, the conveyor controller provides additional information to the track wireless hub to allow for a more direct connection to the pallet wireless hubs (sometimes called a "simplified handshake") that allows for fast connection to pallet wireless hubs that are entering the wireless zone of the track wireless hub. The method begins with the conveyor controller monitoring and controlling movement of the moving elements at 1805. In at least some modern conveyor systems, the conveyor controller monitors the predetermined ID, location, motion, and other parameters related to the moving elements. For example, the moving elements may be monitored using various types of tracking and sensing systems. For example, encoder strips, accelerometers, vision systems, and the like.

When the conveyor controller determines that a moving element is about to enter a wireless zone, at 1810, the conveyor controller provides the track wireless hub with the predetermined ID of the moving element, the predetermined ID of the pallet wireless hub associated with that moving element, or other information that may assist with quickly establishing communications. For example, the predetermined ID/information may include various unique identifiers (or at least unique within the wireless environment) used in wireless communications such as a media access control (MAC) address, IP address, or the like that can be used to aid in faster connection with the pallet wireless hub. The data can be provided to the track wireless hub from the conveyor controller via a high-speed, for example, wired, communications link so that the track wireless hub can receive the information in real time or near real time.

As noted above with respect to Fig. 15, a wireless zone may have a primary zone, in which wireless operations are conducted, and a secondary zone, which acts as a "buffer" allowing communications between a track wireless hub (and thereby a conveyor controller) and a pallet wireless hub to commence before operations by an accessory on the moving element are required. The size of a secondary zone can be determined based on moving element movement capabilities (speed, acceleration and the like) to allow for communications to commence before a moving element enters a primary zone, even when the moving element is moving.

The track wireless hub uses the predetermined ID/information to perform a direct connection (i.e. a simplified handshake) with the pallet wireless hub at 1815. In some cases, the simplified handshake may be a new message directed at a particular pallet wireless hub (because the pallet wireless hub ID will be known) and including instructions that can be quickly acknowledged by the pallet wireless hub, while implementing the instructions. In other cases, the simplified handshake may be a simple "ping" (including the pallet wireless hub ID) and a related simple acknowledgment from the pallet wireless hub to determine that the pallet wireless hub is receiving the signal. In some cases, the response may be a message with the heartbeat signal noted above. In any case, since the track wireless hub will already know the particular pallet wireless hub entering the zone because of the information/data provided by the conveyor controller, communications can begin almost immediately. This contrasts with conventional systems in which there is a longer handshake process, involving a query/response process or the like, to determine which pallet wireless hub out of many might have entered the zone.

Once the simplified handshake is completed, wireless communications between the track wireless hub and the pallet wireless hub continue at 1820, using, for example, the concise communication format/protocol described herein. In general, the communications allow for the transfer of instructions, data, feedback, and the like between the conveyor controller and accessory(ies) or the like on the moving element.

In some cases, the conveyor controller can also monitor for when a moving element is going to be leaving the wireless zone, at 1825. Prior to the moving element leaving the zone, the conveyor controller can optionally send any final commands, at 1830, to the accessory via the track and pallet wireless hubs. Final commands could include a lock command to control how the accessory will act when out of contact with a track wireless hub, for example, causing the accessory to stop movement, continue operating in the same way, perform one or more operations for a predetermined period of time or number of operations, remain in or move between various states, or the like.

Just prior to exiting the wireless zone, the conveyor controller notifies the track wireless hub, at 1835, and the track wireless hub can terminate communications with the pallet wireless hub to open up bandwidth for other pallet wireless hubs.

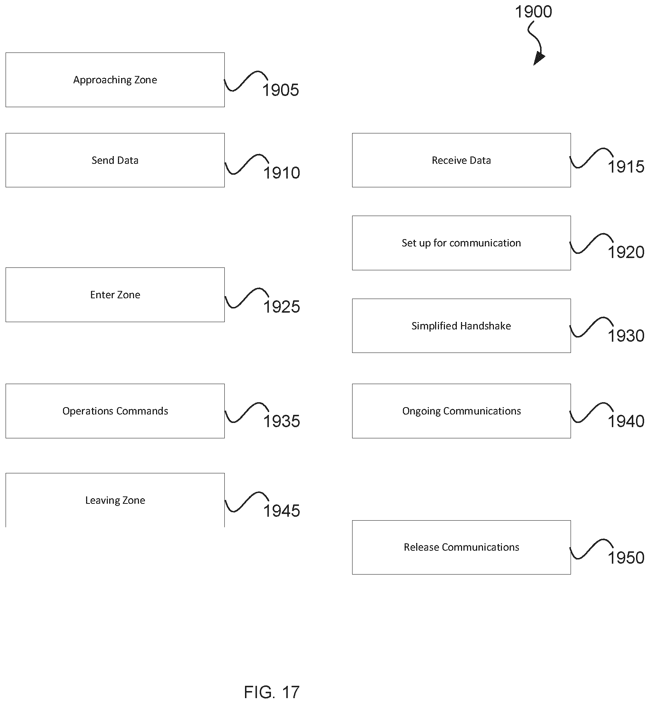

FIG. 17 illustrates an embodiment of a timeline 1900 for wireless communication in a conveyor. Fig. 17 illustrates the operations of the conveyor controller and the track wireless hub. At 1905, the conveyor controller determines that a moving element is approaching a wireless zone. At 1910, the conveyor controller sends data related to the moving element (for example, ID sufficient to uniquely identify the pallet wireless hub on the moving element for communications) to the track wireless hub. It will be understood that the data may be for the pallet wireless hub itself or for the moving element and a look-up table or the like can be used to co-relate to the pallet wireless hub. At 1915, the track wireless hub receives the data related to the moving element and then sets up for communication with the pallet wireless hub associated with the moving element at 1920. At 1925, the conveyor controller notifies the track wireless hub that the moving element enters the zone. Simultaneous or shortly after entry the track wireless hub performs the direct connection/simplified handshake with the pallet wireless hub at 1930. It is intended that the track wireless hub will establish communications with the pallet wireless hub within approximately 0.1 second, which would be, for example, a distance of 0.4m at 4 m/sec on a linear motor track. In this way, the size of a secondary zone can be determined to allow for communications to commence before a moving element enters a primary zone. At 1935, the conveyor controller sends operations commands via the track wireless hub, which conducts on-going communications with the pallet wireless hub at 1940. At 1945, the conveyor controller then notifies the track wireless hub when the moving element is leaving the wireless zone. At 1950, the track wireless hub releases communications with the pallet wireless hub. As noted above, there may also be any final operations commands sent prior to leaving the wireless zone.

In some situations, such as at conveyor start up, the conveyor controller may not know the locations of the moving elements or their identification. In this case, either the conveyor controller may obtain identification and location information in a conventional manner or the track wireless hub can perform a more detailed handshake procedure to determine the moving element IDs and communicate that to the conveyor controller, which can then determine location information.

In some situations, there may be overlapping wireless zones. In this case, the conveyor controller can assist with transition between zones by providing moving element location and identification such that handoff between track wireless hubs can be timed to occur in an orderly fashion. For example, the conveyor controller can communicate with each track wireless hub when the moving element will be leaving one wireless zone and entering the other as outlined above, if necessary, with a small difference in timing (such as, for example, .1s, .01s, .05s or the like) between the release of communications with one track wireless hub and the simplified handshake with the other track wireless hub.

In some cases, wireless zones may be able to assist with moving element identification and/or tracking, in particular at start-up or upon the addition of a new moving element being added to the conveyor system. For example, on start-up, the conveyor controller may need to move the moving elements to determine their location (i.e. move the moving elements enough that they interact with sensors on the track to identify location). However, in some cases, this movement may not provide an actual identification of which moving element is which (for example, if the moving element sensor system does not include moving element ID). In this case, the track wireless hub(s) could perform conventional handshaking with pallet wireless hubs in the wireless zone(s), the conveyor controller could then individually vibrate the moving elements, and then, based on accelerometer data and unique identifier for the pallet wireless hub (or the like) from the moving element received via the pallet and track wireless hubs, the conveyor controller can identify the ID for each of the moving elements. It will be understood that, in this case, moving elements, pallets, accessories, or the like would need an accelerometer. This type of system could be useful in cases where, for example, there is only one or a limited number of moving element ID readers on the conveyor system and the conveyor controller would otherwise need to move each moving element past an ID reader before conveyor operations and/or wireless communications could begin. This technique of conventional handshake with accelerometer data to provide moving element ID can also be applied to identify new pallets added to the conveyor system and/or for exception handling/fault recovery or re-initialization.

In some cases, two moving elements may be entering a zone at the same time or back-to-back. In these cases, the conveyor controller can control the movement of each moving element so that there is time to do the direct/simplified handshake and make sure that wireless communications can begin for each moving element at the appropriate timing.

In a further case, wireless zones may be used for monitoring for errors or faults in operation. For example, when there are multiple moving elements (i.e. pallet wireless hubs) in a wireless zone at the same time, the track wireless hub can keep the conveyor controller updated with the number of moving elements the track wireless hub is currently communicating with in its zone. Since the conveyor controller is also monitoring all pallets in the zone, it can detect if there is a discrepancy between the number of pallets it expects are in the zone with the number the track wireless hub is reporting. If there is a discrepancy, the system can perform a recovery or re-initialization sequence, for example, of the types described above. Further, if a conveyor controller tries to communicate with a pallet wireless hub that a track wireless hub has not established communication with, the system can detect this fault condition and perform an appropriate recovery or re-initialization sequence of the type described above. In some cases, these fault recovery sequences can use a more conventional handshake to detect pallet wireless hubs (moving elements) in a wireless zone.

The embodiments herein have been disclosed with a certain degree of particularity for the purpose of description but not of limitation. Those skilled in the art will appreciate that numerous modifications and variations can be made to the embodiments without departing from the spirit and scope of the application.

Embodiments of the disclosure can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device and can interface with circuitry to perform the described tasks.

While the above description provides examples of one or more processes or apparatuses, it will be appreciated that other processes or apparatuses may be within the scope of the disclosure. It will also be understood that the processes and apparatuses may be implemented using hardware or software components or an appropriate combination thereof. Software may be provided as instructions on a physical computer medium or the like for execution on a processor of a computing device.

## Claims

1. A method for wireless communication with accessories on moving elements in a conveyor system, the conveyor system comprising a conveyor controller for independently controlling the moving elements, the method comprising:
configuring two or more track wireless hubs to cover respective wireless zones, each providing wireless coverage for at least a portion of the conveyor system;
configuring two or more moving elements on the conveyor system with pallet wireless hubs configured to communicate with the two or more track wireless hubs;
communicating between the conveyor controller and at least one of the two or more track wireless hubs when one of the moving elements having a predetermined identification is entering the wireless zone for the at least one of the two or more track wireless hubs;
performing a simplified connection between the track wireless hub and the pallet wireless hub of the entering moving element based on the predetermined identification; and
controlling an accessory on the entering moving element using communications from the conveyor controller via the track wireless hub and the pallet wireless hub.

2. A method according to claim 1, further comprising:
communicating between the conveyor controller and the track wireless hub when one of the moving elements having a predetermined identification is leaving the wireless zone for the track wireless hub; and
discontinuing communication of the track wireless hub with the pallet wireless hub for the leaving moving element.

3. A method according to claim 2, further comprising, prior to discontinuing communication, sending a communication locking the accessory prior to the moving element leaving the wireless zone.

4. A method according to claim 3, wherein the locking the accessory comprises causing the accessory to:
stop;
continue operating in the same way;
perform one or more operations for a predetermined period of time; or
perform one or more operations for a predetermined number of operations.

5. A method according to any one of claims 1 to 4, wherein the performing a simplified connection comprises a message from the track wireless hub to the pallet wireless hub containing the predetermined identification and a basic acknowledgement of communications from the pallet wireless hub to the track wireless hub.

6. A method according to claim 5, wherein the basic acknowledgement of communications comprises a single bit that is toggled on each message thereafter from the pallet wireless hub to indicate that the pallet wireless hub is operational.

7. A method according to any one of claims 1 to 6, wherein the communications between the track wireless hub and pallet wireless hub are implemented using a simplified communications protocol.

8. A method according to claim 7, wherein the simplified communications protocol uses messages of less than two bytes.

9. A system for wireless communication with accessories on moving elements in a conveyor system, the conveyor system comprising a conveyor controller for independently controlling the moving elements, the system comprising:
two or more track wireless hubs configured to cover respective wireless zones providing wireless coverage for at least a portion of the conveyor system; and
at least two pallet wireless hubs provided to at least some moving elements on the conveyor system and configured to communicate with the two or more track wireless hubs, wherein
the conveyor controller is configured to communicate with at least one of the two or more track wireless hubs when one of the moving elements having a predetermined identification is entering a related wireless zone for the at least one of the two or more track wireless hubs;
the track wireless hub and the pallet wireless hub of the entering moving element are configured to perform a simplified connection based on the predetermined identification; and
the pallet wireless hub is configured to provide communications received from the track wireless hub to an accessory controller on the entering moving element for controlling an accessory on the entering moving element based on the communications.

10. A system according to claim 9, wherein:
the conveyor controller is configured to:
communicate with the track wireless hub when one of the moving elements is leaving the wireless zone for the track wireless hub and provide the predetermined identification for the leaving moving element; and
cause the track wireless hub to discontinue communication with the pallet wireless hub based on the predetermined identification of the leaving moving element.

11. A system according to claim 10, wherein, prior to discontinuing communication, the track wireless hub may send a communication locking the accessory prior to the moving element leaving the wireless zone.

12. A system according to any one of claims 9 to 11, wherein the performing a simplified connection comprises a message from the track wireless hub to the pallet wireless hub containing the predetermined identification and a basic acknowledgement of communications from the pallet wireless hub to the track wireless hub.

13. A system according to claim 12, wherein the basic acknowledgement of communications comprises a single bit that is toggled on each message thereafter from the pallet wireless hub to indicate that the pallet wireless hub is operational.

14. A system according to any one of claims 9 to 13, wherein the communications between the track wireless hub and pallet wireless hub are implemented using a simplified communications protocol in which each message comprises two bytes or less.

15. A method for identifying moving elements in a conveyor system, the conveyor system comprising a conveyor controller for independently controlling the moving elements, the method comprising:
configuring at least one track wireless hub to provide wireless coverage for at least a portion of the conveyor system;
configuring each of a plurality of moving elements on the conveyor system with a pallet wireless hub configured to communicate with the at least one track wireless hub;
establishing wireless communications between the at least one track wireless hub and the pallet wireless hubs;
independently vibrating each of the plurality of moving elements via the conveyor controller;
identifying the vibration via an accelerometer provided to the moving element and communicating the accelerometer data to the conveyor controller via the pallet wireless hub and the track wireless hub; and
identifying the plurality of moving elements based on the accelerometer data.
